(19) Europäisches Patentamt
European Patent Office
Office européen des brevets

(11) **EP 3 381 113 B1**

(12) **FASCICULE DE BREVET EUROPEEN**

(45) Date de publication et mention de la délivrance du brevet:
**07.10.2020 Bulletin 2020/41**

(21) Numéro de dépôt: **16787443.7**

(22) Date de dépôt: **26.10.2016**

(51) Int Cl.:
*H02M 1/34* (2007.01)     *H02M 7/5387* (2007.01)
*H02M 7/00* (2006.01)

(86) Numéro de dépôt international:
**PCT/EP2016/075789**

(87) Numéro de publication internationale:
**WO 2017/089061 (01.06.2017 Gazette 2017/22)**

(54) **CIRCUIT AMORTISSEUR UNDELAND RÉGÉNERATIVE POUR DEMI-BRAS D'UN ONDULEUR**

REGENERATIVER UNDELAND SNUBBER FÜR WECHSELRICHTER HALBBRÜCKEN

REGENERATIVE UNDELAND SNUBBER MODULE FOR INVERTER HALF-BRIDGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2015 FR 1561212**

(43) Date de publication de la demande:
**03.10.2018 Bulletin 2018/40**

(73) Titulaires:
• **IFP Energies nouvelles**
  **92500 Rueil-Malmaison (FR)**
• **Mavel S.r.l.**
  **11026 Pont Saint Martin (AO) (IT)**

(72) Inventeurs:
• **DIB, Wissam**
  **92150 Suresnes (FR)**
• **CHIONO, Denny**
  **11010 Saint Nicolas (AO) (IT)**
• **BETTONI, Davide**
  **10010 Settimo Vittone (IT)**

(74) Mandataire: **Leoncini, Alberto et al**
**A.Bre.Mar. s.r.l.**
**Consulenza in Proprietà Industriale**
**Via Servais, 27**
**10146 Torino (IT)**

(56) Documents cités:
**DE-A1- 10 062 075        JP-A- H03 145 756**
**US-A1- 2012 147 641**

• **RUNGE W ET AL: "SOME ASPECTS OF THE CIRCUIT DESIGN OF HIGH POWER GTO CONVERTERS", PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, vol. 3, 9 octobre 1989 (1989-10-09), pages 1555-1560, XP000143585,**
• **XIANGNING HE ET AL: "Bridge leg snubbers for GTO thyristor inverters", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, vol. 2, 8 octobre 1995 (1995-10-08), pages 1038-1044, XP010193115, DOI: 10.1109/IAS.1995.530416 ISBN: 978-0-7803-3008-5**
• **SHAKWEH Y ET AL: "Snubber energy recovery for a high power traction drive", ELECTRIC RAILWAYS IN A UNITED EUROPE, 1995., INTERNATIONAL CONFERENCE ON AMSTERDAM, NETHERLANDS, LONDON, UK,IEE, UK, 1 janvier 1995 (1995-01-01), pages 92-96, XP006527910, DOI: 10.1049/CP:19950185 ISBN: 978-0-85296-631-0**
• **TAUFIQ J A: "Advanced inverter drives for traction", 19930101, 1 janvier 1993 (1993-01-01), pages 224-228, XP006511671,**

**Description**

La présente invention concerne le domaine des convertisseurs pour la conversion de l'énergie électrique, notamment pour les machines électriques à haute vitesse et/ou à vitesse variable.

Un convertisseur statique est un système permettant de convertir un signal électrique en un autre signal électrique possédant des caractéristiques différentes. Par exemple, un convertisseur peut permettre de convertir une tension alternative en une autre tension alternative avec une fréquence et/ou une amplitude différente, on parle alors de convertisseur alternatif/alternatif ou AC/AC. Selon un autre exemple, un convertisseur peut permettre de convertir une tension alternative en une tension continue, on parle alors de convertisseur alternatif/continu ou AC/DC. Pour la conversion inverse continu/alternatif, on parle de convertisseur DC/AC. Selon un dernier exemple, un convertisseur peut convertir une tension continue en une tension continue de tension différente, on parle alors de convertisseur DC/DC. Les convertisseurs peuvent être réversibles ou non réversibles. Généralement, la conversion est mise en œuvre au moyen de commutateurs (interrupteurs) commandés.

Pour piloter des machines électriques, notamment des machines électriques à aimants permanents, à partir de système(s) de stockage d'énergie électrique (par exemple une batterie), il est nécessaire de convertir l'énergie électrique continue en énergie alternative triphasée. Cette conversion peut être réalisée au moyen d'un convertisseur DC/AC. Un tel convertisseur doit fournir trois tensions sinusoïdales déphasées de 120° électriques les unes par rapport aux autres, dont l'amplitude dépend directement du couple demandé (mais aussi du régime de rotation), et dont la fréquence dépend uniquement du régime de rotation de la machine électrique reliée au convertisseur.

Classiquement, un convertisseur DC/AC comprend trois bras de commutations. Chaque bras de commutation comporte deux commutateurs commandés et deux diodes placées en parallèle des commutateurs commandés. En fonction du courant de charge demandé, un bras peut être composé de plusieurs 'sous bras' en parallèle. Les phases de la machine électrique sont reliées au point milieu de chaque bras. On commande chaque bras séparément en pilotant l'ouverture et la fermeture des commutateurs sur des périodes de découpage, de manière à former un signal triphasé.

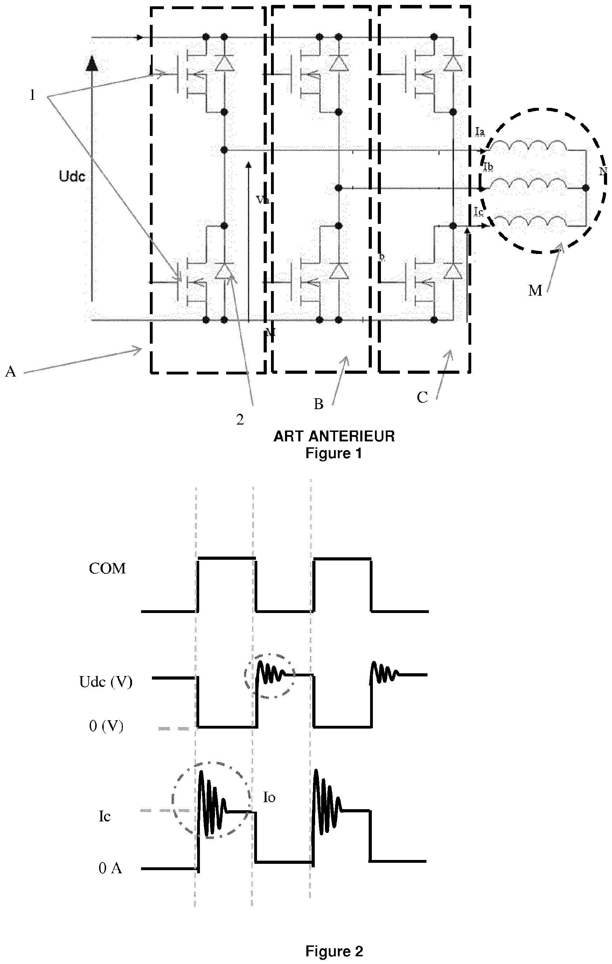

La figure 1 illustre un tel convertisseur classique DC/AC. La tension continue du moyen de stockage d'énergie électrique est indiquée Udc. Le moteur triphasé M est représenté schématiquement par trois bobines, alimentées par les courants Ia, Ib et Ic. Le convertisseur comporte trois bras de commutation A, B, C, chaque bras de commutation A, B, C est relié à une phase de la machine électrique M. Chaque bras de commutation comporte deux commutateurs 1 et deux diodes 2. Les bras de commutation A, B, C sont disposés en parallèle, entre les deux phases d'entrée continues du convertisseur de tension Udc. Les phases de sortie des bras de commutation A, B, C sont reliées au point milieu (entre les deux commutateurs) des bras de commutation.

La figure 2 représente le signal de commande COM des interrupteurs avec un rapport cyclique constant de 50%, la tension Udc et le courant Ic aux bornes d'un commutateur, pour un convertisseur DC/AC classique (tel que décrit ci-dessus en référence à la figure 1). Pour le signal de commande COM, la partie basse du créneau correspond au commutateur ouvert, et la partie haute du créneau correspond au commutateur fermé. On parle pour ce cas de commutation dite dure ou 'tout ou rien' (de l'anglais « hard switching »). On remarque que pour cette conception du convertisseur, des dépassements de la tension Udc et du courant Io apparaissent. Le courant Io correspond à la valeur permanente de Ic, et correspond au courant envoyé à la machine électrique.

Ainsi, les principaux inconvénients de cette conception classique du convertisseur sont les suivants :

- pertes par commutation : cette conception présente des pertes par commutation importantes, ce qui tend à rendre son utilisation incompatible à des fréquences de commutation élevées et donc pour des machines électriques utilisées à très hautes vitesses,
- dépassement de courant/tension : comme présenté sur la figure 2, cette stratégie présente des dépassements de tension (de l'anglais « overshoot ») et de courant lors de la commutation instantanée de l'interrupteur. Ainsi ce type de pilotage nécessite une prise de marge sur la tension et le courant des différents composants lors de la conception du convertisseur (appelé aussi onduleur). Cela implique un surdimensionnement des composants utilisés, (par exemple : pour une tension de bus continu de 300 Volt, on utilise un commutateur IGBT avec une tension nominale de 600 Volt), et
- émissions électromagnétiques importantes (CEM).

En partant des inconvénients de la stratégie « Hard switching » (pertes, incompatibilité avec les moteurs à hautes vitesses), une conception dite commutation douce (ou de l'anglais « Soft switching ») a été développée. Ainsi, pour limiter les dépassements du courant et de permet d'assurer le fonctionnement de ce circuit et de rebaisser la tension au borne du circuit capacitif. Une telle conception de convertisseur DC/AC est décrite notamment dans la demande de brevet WO 11016854.

D'autres convertisseurs DC/AC sont décrits dans les documents DE 100 62 075 A1, RUNGE w ET AL: "SOME ASPECTS OF THE CIRCUIT DESIGN OF HIGH POWER GTO CONVERTERS" et JP H03 145756 A.

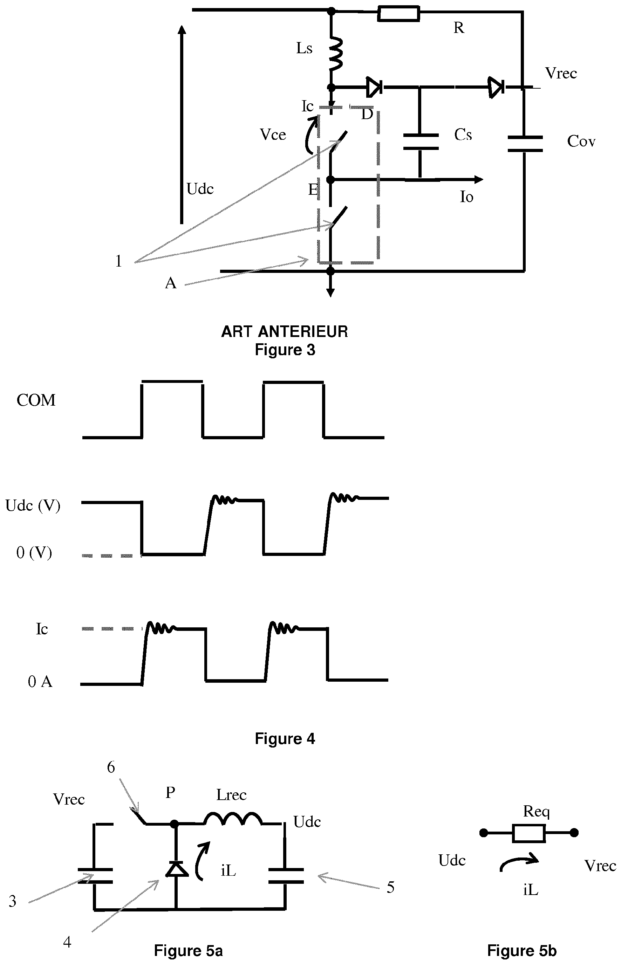

La figure 3 représente un schéma simplifié d'un bras de commutation (avec deux commutateurs 1) avec une capacité Cs, une bobine Ls, une résistance R et une capacité Cov pour une commutation douce. Ce circuit est connu par l'appellation anglaise « Undeland Snubber ». La tension Udc correspond à la tension aux bornes du moyen de stockage de l'énergie électrique continue. La bobine Ls est placée entre une phase d'entrée continue Udc et le bras de commutation A. Une branche part de la jonction entre la bobine Ls et le bras de commutation A, cette branche comporte deux diodes D, et arrive en une jonction entre la résistance R et le condensateur Cov. L'autre extrémité de la résistance R est connectée à la phase d'entrée continue du convertisseur. L'autre extrémité du condensateur Cs est connectée à la phase de sortie alternative du bras de commutation A. L'autre extrémité de la capacité Cov est connectée à la masse. La capacité Cs permet de moduler l'évolution de la tension aux bornes du commutateur. Cette capacité stocke une part de l'énergie due à la commutation douce des interrupteurs. L'autre partie de cette énergie est stockée dans une capacité d'une valeur plus élevée Cov. Ensuite, l'énergie stockée dans la capacité est renvoyée au système de stockage utilisé (batterie) à travers la résistance. La bobine Ls permet de moduler l'évolution du courant aux bornes du commutateur. En fait, l'énergie créée par la bobine Ls n'est pas en entièrement stockée dans la capacité Cs, d'où la nécessité d'une deuxième capacité Cov d'une valeur plus élevée que Cs. La résistance assure le fonctionnement du système et permet de rebaisser la tension Vrec.

La figure 4 présente, de manière similaire à la figure 2, le signal de commutation COM, l'évolution de la tension Udc et du courant Ic du commutateur lors d'une commutation dite « soft ». Pour le signal de commande COM, la partie basse du créneau correspond au commutateur ouvert, et la partie haute du créneau correspond au commutateur fermé. On remarque sur cette figure, que les dépassements de tension Udc et de courant Ic sont diminués par rapport à la commutation dite « hard ».

Les avantages de la commutation douce sont :

- moins de pertes par commutation, cette conception du convertisseur est compatible avec des fréquences de commutation élevées, ainsi, cette conception peut être utilisée pour piloter des machines électriques à hautes vitesses,
- peu de dépassement de tension et du courant sur le commutateur, donc plus besoin de surdimensionner les composants, et
- l'évolution de la tension et du courant aux bornes des commutateurs lors de la transition est modulée par le choix de Ls et Cs respectivement.

Cette conception du convertisseur nécessite un agencement particulier des différents composants électriques, ce qui rend leur montage long et complexe.

Pour pallier ces inconvénients, la présente invention concerne un module de puissance pour un système de conversion d'une puissance électrique continue en puissance électrique triphasée. Le module de puissance selon l'invention comporte deux entrées, une sortie, deux commutateurs, deux diodes, et deux condensateurs. Ainsi, le module de puissance pour un système de conversion peut être standardisé, permettant un montage simple et rapide du système de conversion. En outre, le module de puissance selon l'invention est adapté à une commutation douce, par la présence des condensateurs, ce qui permet de minimiser les pertes par commutation, de limiter les dépassements de tension et de courant.

## Le dispositif selon l'invention

L'invention concerne un module de puissance pour système de conversion d'une puissance électrique continue en puissance électrique triphasée, ledit module de puissance comportant deux entrées aptes à être connectées aux entrées continues dudit système de conversion, deux commutateurs placés en série entre lesdites entrées, et une première sortie disposée entre lesdits deux commutateurs, ladite première sortie étant apte à être connectée à une phase de sortie alternative dudit système de conversion. Ledit module de puissance comporte en outre deux diodes et deux condensateurs.

Selon l'invention, lesdites deux diodes sont montées en série, et sont connectées à une première entrée dudit module et à une deuxième sortie dudit module, ladite deuxième sortie étant apte à être connectée à un module récupérateur d'énergie dudit système de conversion.

Avantageusement, un premier condensateur de modulation de tension est connecté entre un point compris entre lesdites diodes et ladite première sortie.

Conformément à une mise en œuvre, un deuxième condensateur est connecté entre ladite deuxième sortie dudit module et à une deuxième entrée dudit module.

De préférence, lesdits commutateurs sont du type MOSFET ou IGBT.

Selon une caractéristique de l'invention, ledit condensateur de modulation de tension a une capacité comprise entre 4 et 15 nF.

Selon une conception possible, ledit deuxième condensateur a une capacité comprise entre 500 et 5000 nF.

Conformément à un mode de réalisation, ledit module forme un bloc apte à être monté sur une carte d'un système de conversion.

De manière avantageuse, ledit bloc comporte des moyens de fixation.

Préférentiellement, lesdits moyens de fixations comprennent au moins une encoche pour le passage d'une vis.

De plus, l'invention concerne un système de conversion d'une puissance électrique continue en puissance électrique triphasée comportant trois bras de commutation. Chaque bras de commutation comporte un module de puissance selon l'une des caractéristiques précédentes.

Avantageusement, chaque bras de commutation comprend deux ou trois modules de puissance selon l'une des caractéristiques précédentes.

Selon une caractéristique, ledit système de conversion comporte un module récupérateur d'énergie et au moins une bobine de modulation de courant.

En outre, l'invention concerne un système moteur comprenant au moins un moyen de stockage d'énergie électrique et une machine électrique triphasée. Le système moteur comporte un système de conversion selon l'une des caractéristiques précédentes, pour convertir l'énergie électrique continue dudit moyen de stockage de l'énergie électrique en énergie électrique alternative triphasée pour ladite machine électrique.

**Présentation succincte des figures**

D'autres caractéristiques et avantages du système selon l'invention, apparaîtront à la lecture de la description ci-après d'exemples non limitatifs de réalisations, en se référant aux figures annexées et décrites ci-après.

La figure 1, déjà décrite, illustre un convertisseur DC/AC classique, avec commutation dure, selon l'art antérieur.
La figure 2, déjà décrite, illustre le signal de commutation, la tension et l'intensité dans une phase pour un convertisseur DC/AC selon la conception de la figure 1.
La figure 3, déjà décrite, illustre un convertisseur DC/AC selon l'art antérieur, avec commutation douce.
La figure 4, déjà décrite, illustre le signal de commutation, la tension et l'intensité dans une phase pour un convertisseur DC/AC selon la conception de la figure 3.
La figure 5a illustre un exemple de réalisation du module récupérateur d'énergie électrique pour un convertisseur selon un mode de réalisation de l'invention.
La figure 5b illustre un modèle équivalent résistif au module récupérateur d'énergie électrique de la figure 5a.
La figure 6 illustre un schéma électrique d'un module de puissance selon un mode de réalisation de l'invention.
La figure 7 illustre la conception d'un module de puissance selon un mode de réalisation de l'invention.

**Description détaillée de l'invention**

La présente invention concerne un module de puissance pour un système de conversion d'une puissance électrique continue en puissance électrique triphasée. Le module de puissance sert de bras de commutation du système de conversion. Le module de puissance comporte :

- deux entrées aptes à être connectées aux entrées continues du système de conversion, la première entrée peut être reliée à une tension positive, et la deuxième entrée peut être reliée à la masse,
- deux commutateurs montés en série entre les deux entrées, les commutateurs peuvent être commandés, de manière à fournir un courant de sortie alternatif,
- une sortie apte à être connectée à une phase de sortie alternative du système de conversion, la sortie est connectée en un point entre les deux commutateurs,
- deux diodes, permettant le passage du courant selon une direction, et
- deux condensateurs, par exemple un premier condensateur dit condensateur de modulation de tension (qui permet la modulation de la variation de tension pour la commutation douce) et par exemple un deuxième condensateur (qui permet de stocker l'énergie créée qui n'est pas stockée dans le premier condensateur lors de la modulation de la tension).

Un tel module de puissance est compatible avec une large plage de fonctionnement de tension.

Selon un mode de réalisation de l'invention, le module de puissance contient uniquement ces composants électroniques : deux commutateurs, deux diodes, et deux condensateurs. Pour ce mode de réalisation, seul le deuxième condensateur peut être formé par une association en parallèle de plusieurs capacités (par exemple 2 ou 3 capacités).

En outre, le module de puissance peut être adapté à être connecté à un module récupérateur d'énergie électrique. Dans ce cas, le module de puissance peut comprendre une deuxième sortie apte à être connectée au module récupérateur d'énergie électrique. Cette deuxième sortie peut être connectée à une diode.

Selon l'invention, les diodes du module de puissance sont montées en série. Les diodes sont connectées à une première entrée du module de puissance. Par exemple, une entrée est reliée à la tension positive. Le module de puissance comporte une deuxième sortie pour un module récupérateur d'énergie électrique et les diodes sont connectées à cette deuxième sortie.

De plus, le condensateur de modulation de tension peut être monté entre un point compris entre les deux diodes et la première sortie.

En outre, le deuxième condensateur peut être monté entre la deuxième sortie et la deuxième entrée du module de puissance, c'est-à-dire sur l'entrée du module de puissance, sur laquelle les diodes ne sont pas montées, par exemple cette deuxième entrée peut correspondre à la masse.

Conformément à un mode de réalisation de l'invention, les commutateurs peuvent être des commutateurs de type MOSFET (acronyme anglais de « Metal Oxide Semiconductor Field Effect Transistor » qui se traduit par transistor à effet de champ à structure métal-oxyde-semi-conducteur) et/ou IGBT (transistor bipolaire à grille isolée de l'anglais « Insulated Gate Bipolar Transistor »), en fonction de la tension d'entrée du bus DC. Pour la haute tension, on peut utiliser des interrupteurs (commutateurs) IGBT. Pour la basse tension, on peut utiliser des interrupteurs MOSFET.

De préférence, les commutateurs peuvent être commandés par une méthode de modulation de largeur d'impulsion (MLI ou en anglais PWM pour « Puise Width Modulation »). Le principe général de cette méthode de modulation est qu'en appliquant une succession d'états discrets pendant des durées bien choisies, on peut obtenir en moyenne sur une certaine durée n'importe quelle valeur intermédiaire.

Pour la modulation des variations de la tension, le premier condensateur de modulation de tension peut avoir une valeur comprise entre 1 et 15 nF, de préférence entre 2 et 10 nF.

Le deuxième condensateur a, de préférence, une capacité plus élevée que le premier condensateur. Le deuxième condensateur peut avoir une valeur comprise entre 500 et 5000 nF, de préférence entre 600 et 2500 nF. Selon une variante de réalisation de l'invention, le deuxième condensateur peut être formé de plusieurs capacités associées en parallèle et/ou en série. De manière avantageuse, pour limiter l'encombrement, le deuxième condensateur peut être formé de trois capacités identiques (de même capacité) associées en parallèle.

Avantageusement, le module de puissance se présente sous la forme d'un bloc, de manière à faciliter son assemblage, sa compacité et sa standardisation. Le bloc peut comprendre un support, une plaque comprenant un circuit imprimé, et les composants électroniques (commutateurs, diodes, condensateurs) du module de puissance. La plaque peut être sous la forme d'un circuit imprimé. Les composants électroniques sont montés sur la plaque. La plaque est montée sur le support. Le bloc peut être agencé de manière à être monté sur une carte d'un système de conversion. Le bloc peut avoir une forme sensiblement parallélépipédique.

Conformément à une variante de réalisation de l'invention, le bloc peut comporter plusieurs moyens de fixation à la carte d'un système de conversion. Les moyens de fixation peuvent être notamment au moins une encoche prévue pour le passage d'une vis. L'encoche peut être prévue dans le support et/ou la plaque du bloc. L'encoche peut être de forme sensiblement oblongue. Les moyens de fixation peuvent également comprendre au moins une fente ou une saillie, de manière à permettre une fixation par encliquetage (« clipsage ») ou pour permettre une mise en position du bloc.

Le bloc peut également comprendre des moyens de fixation pour la fixation de plusieurs modules entre eux, de manière à pouvoir associer plusieurs modules entre eux, notamment pour le cas où les courants sont élevés, ce qui permet de réaliser le bras de commutation d'un système de conversion sans employer des composants ayant des caractéristiques spécifiques élevées et étant onéreux.

Le module de puissance selon un mode de réalisation de l'invention ne comporte pas de moyens de récupération d'énergie électrique, ni de bobine pour la modulation de la variation de courant, permettant la commutation douce.

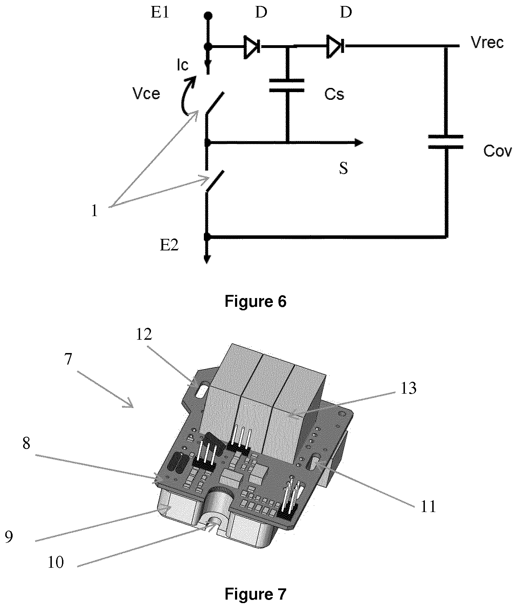

La figure 6 illustre, de manière non limitative, un schéma électrique d'un module de puissance selon un mode de réalisation de l'invention. Le module de puissance comporte deux entrées E1 et E2 destinées à être connectées aux entrées continues du système de conversion. L'entrée E1 peut correspondre à l'entrée de tension positive, et l'entrée E2 peut correspondre à la masse. Entre les deux entrées E1 et E2, deux commutateurs commandés 1 sont montées en série. Entre les deux commutateurs 1, la sortie S est connectée, cette sortie S est destinée à être connectée à une phase de sortie du système de conversion. Deux diodes D sont montées en série entre l'entrée E1 et la deuxième sortie Vrec, qui est apte à être connectée à un module récupérateur d'énergie électrique. Un premier condensateur Cs, destinée à la modulation de tension, est connecté en un point entre les deux diodes D et la première sortie S. Un deuxième condensateur Cov est connecté entre la deuxième sortie Vrec et la deuxième entrée E2.

La figure 7 illustre, schématiquement et de manière non limitative, un module de puissance selon un mode de réalisation de l'invention. Le module a sensiblement la forme d'un bloc 7. Le bloc 7 comporte une plaque 8, sous forme d'un circuit imprimé sur laquelle sont montées différents composants électroniques. La plaque 8 a sensiblement la forme d'un rectangle. La plaque 8 est montée sur un support 9. Le support 9 a sensiblement la forme d'un parallélépipède rectangle. La plaque 8 et le support 9 comportent plusieurs moyens de fixation : une encoche 10 prévue pour le passage d'une vis, et deux fentes 11 et 12 pour une fixation par encliquetage et/ou pour une mise en position du bloc. Des composants électroniques (représentés schématiquement) sont montées sur la plaque 8 du côté opposé au support 9.

Parmi les composants électroniques, le deuxième condensateur Cov est formé de trois condensateurs 13 associés en parallèle.

En outre, la présente invention concerne un système de conversion (convertisseur) DC/AC permettant de convertir une énergie électrique continue en énergie électrique alternative triphasée. Avantageusement, le système de conversion selon l'invention, peut être bidirectionnel (réversible). Ainsi, au moyen du système de conversion selon l'invention, une énergie alternative triphasée peut être convertie en énergie électrique continue.

Le système de conversion selon un mode de réalisation de l'invention, comporte trois bras de commutation et une entrée continue, et par exemple trois phases de sorties alternatives. Chaque bras de commutation comporte un module de puissance selon l'invention. Ainsi, le système de conversion comporte au moins trois modules de puissance. Selon un mode de réalisation de l'invention, chaque bras de commutation peut comprendre une pluralité, de préférence deux, trois ou quatre modules de puissance associés en parallèle. Cette association de modules de puissance permet d'augmenter les caractéristiques du courant électrique, notamment l'intensité du courant électrique. Par exemple, si on souhaite un convertisseur DC/AC avec un courant de 300 A Rms (ou valeur efficace), on peut associer en parallèle trois modules de puissance autorisant un courant de 100 A Rms. Le fait d'utiliser des modules de puissance séparés et standardisés pour former des bras de commutation permet de faciliter le montage et la conception du convertisseur. Selon un mode de réalisation de l'invention, le système de conversion comporte en outre un circuit de modulation de tension et d'intensité. Le circuit de modulation de tension et d'intensité permet une commutation douce (« soft switching »), ce qui permet de limiter les pertes par commutation, de limiter les dépassements de tension et de courant sur les commutateurs. Le circuit de modulation comporte une bobine, qui module la variation de courant, et un premier et un deuxième condensateur par module de puissance, pour moduler la variation de tension. Les condensateurs du circuit de modulation sont inclus dans les modules de puissance. Le premier condensateur permet la modulation de la variation de tension, et le deuxième condensateur permet de stocker l'énergie créée par la bobine et non stockée par le premier condensateur.

Selon un mode de réalisation de l'invention, le système de conversion comporte en outre un module récupérateur d'énergie électrique. Ainsi, le système de conversion ne comporte pas de résistance, dans laquelle de l'énergie est dissipée pour l'art antérieur. Au contraire, le module récupérateur d'énergie électrique, qui remplace la résistance, permet de récupérer l'énergie disponible ou créée lors de la commutation dite douce, en récupérant l'énergie disponible lors de la commutation douce, et en l'envoyant vers des moyens de stockage d'énergie électrique (par exemple une batterie), connectés aux phases continues du système de conversion. Ainsi, les pertes électriques sont fortement réduites. Le module récupérateur d'énergie électrique est relié aux bras de commutation et au circuit de modulation.

Le module récupérateur d'énergie électrique peut comprendre au moins une inductance, au moins une diode, au moins un condensateur et au moins un commutateur. Le commutateur est commandé de manière à autoriser la récupération d'énergie et son transfert vers les moyens de stockage d'énergie électrique.

Selon une variante de réalisation de l'invention, le module récupérateur d'énergie électrique peut comporter trois branches reliées en un point de jonction avec :

- une première branche comportant un commutateur,
- une deuxième branche comportant une diode, et
- une troisième branche comportant une inductance.

Ainsi, la carte du circuit imprimé du système de conversion peut être modifiée de manière spécifique pour utiliser la conception d'un convertisseur de commutation douce compatible avec des fréquences de commutation élevées, tout en minimisant les pertes dues au circuit passif rajouté pour assurer le fonctionnement du circuit de modulation.

La figure 5a représente, de manière schématique et non limitative, un tel module récupérateur d'énergie électrique. Le module récupérateur d'énergie électrique comporte trois branches reliées en un point de jonction P, avec :

- une première branche avec un commutateur 6,
- une deuxième branche comportant une diode 4 (dans laquelle circule un courant iL en fonction de la tension à ses bornes), et
- une troisième branche comportant une inductance Lrec.

Sur la figure 5a, le condensateur 5 représente la capacité des moyens de stockage d'énergie électrique (batterie) et n'est pas un composant du module récupérateur. Le condensateur 5 est placé entre l'inductance Lrec et la masse.

De plus, le condensateur 3 représente la capacité Crec, et c'est un composant du module récupérateur. Le condensateur 3 est placé entre le commutateur et la masse.

La diode 4 est placée entre le point de jonction des trois branches et la masse.

En pilotant le commutateur (son rapport cyclique), on peut piloter le courant iL qui circule entre Vrec et Udc (le courant envoyé à la batterie).

Ainsi en considérant l'ensemble formé par le module récupérateur et le condensateur des moyens de stockage d'énergie électrique, l'ensemble est formé de trois branches parallèles, placées entre le point P et la masse, avec :

- une première branche comportant le commutateur 6 et le condensateur 3,
- une deuxième branche comportant une diode 4, et
- une troisième branche comportant l'inductance Lrec et la capacité 5 des moyens de stockage de l'énergie électrique.

Quand le commutateur est fermé, la diode est dans un mode bloquée et le courant iL qui circule dans la bobine Lrec (représenté dans la figure 5a) est égal à $\dfrac{V_{rec} - U_{dc}}{L_{rec}}$

Quand le commutateur est ouvert, la diode est un mode passant est le courant iL qui circule dans la bobine Lrec (représenté dans la figure 5a) est égal à $\dfrac{-U_{dc}}{L_{rec}}$.

Ainsi en pilotant le temps d'ouverture et de fermeture du commutateur, on peut piloter la valeur moyenne du courant iL, et avoir un fonctionnement équivalent d'un circuit résistif.

La figure 5b représente, de manière non limitative, un schéma électrique équivalent du module récupérateur d'énergie électrique illustré à la figure 5a. Ainsi, le module récupérateur d'énergie électrique est équivalent à une résistance équivalente Req, dans laquelle circule un courant iL, mais sans dissipation de l'énergie électrique.

Pour cette variante de réalisation, le courant moyen dans ce circuit peut être exprimé sous la forme suivante :

$$\overline{i} \cong \frac{V_{rec} - U_{dc}}{L_{rec}} \frac{T}{2} = \frac{V_{rec} - U_{dc}}{2 * L_{rec} * Fsw} \cong \frac{V_{rec} - U_{dc}}{Req}$$

avec :

- T la période de commutation du commutateur,
- Vrec la tension de récupération,
- Udc la tension de la phase d'entrée continue,
- Lrec l'inductance du module récupérateur,
- Req la résistance équivalente ?
- Fsw représente la fréquence de commutation des interrupteurs.

De préférence, un tel module récupérateur d'énergie est monté dans le système de conversion équipé du circuit de modulation, de telle sorte que le module récupérateur d'énergie électrique est disposé entre une phase d'entrée continue du système de conversion et la jonction entre le bras de commutation et le condensateur du circuit de modulation. Pour le mode de réalisation de la figure 5a, le module récupérateur d'énergie électrique peut être connecté de telle sorte que :

- le point du module récupérateur relié à ladite phase d'entrée continue (de tension Udc) du système de conversion correspond au point de la troisième branche du module récupérateur entre l'inductance Lrec et le deuxième condensateur 5 (ce condensateur est la capacité de la batterie), et
- le point du module récupérateur relié à la jonction entre le bras de commutation (de tension Vrec) et le condensateur du circuit de modulation correspond au point de la première branche du module récupérateur entre le commutateur 6 et le premier condensateur 3.

Le système de conversion selon l'invention permet de piloter des machines électriques, pour tous types d'application, en particulier pour des machines électriques tournant à de très hautes vitesses avec un rendement de l'onduleur (convertisseur) élevé.

Le convertisseur selon l'invention peut être prévu pour une utilisation embarquée, en particulier au sein d'un véhicule, notamment terrestre, aéronautique ou naval.

Le système de conversion selon l'invention peut également être utilisé dans les systèmes non embarqués de production d'énergie électrique, tels que des turbines, des micro-turbines ou des éoliennes.

En outre, la présente invention concerne un système moteur comprenant au moins un moyen de stockage d'énergie électrique, par exemple une batterie, et une machine électrique triphasée, par exemple une machine électrique à aimants permanents. Le système moteur comporte un système de conversion selon un des modes de réalisation décrits ci-dessus, pour convertir l'énergie électrique continue du moyen de stockage de l'énergie électrique en énergie électrique alternative triphasée pour la machine électrique et éventuellement inversement. Ainsi, grâce au système de conversion, la machine électrique peut être pilotée, tout en limitant les pertes électriques. En outre, si le système de conversion est bidirectionnel (réversible), alors il est également possible de stocker (par exemple dans une batterie) une énergie électrique engendrée par la rotation de la machine électrique.

Exemple comparatif :

Un exemple comparatif a été réalisé, de manière à comparer les pertes du système de conversion selon l'invention, avec les pertes des systèmes de conversion DC/AC selon l'art antérieur. Le système selon l'invention testé correspond au mode de réalisation de la figure 5a (récupérateur d'énergie électrique), chaque bras de commutation étant formé par un module de puissance selon l'exemple de la figure 6 (module de puissance). Les systèmes de conversion DC/AC de l'art antérieur correspondent respectivement à la commutation dure et à la commutation douce, respectivement selon les réalisations des figures 1 et 3.

Pour cet exemple, les valeurs utilisées pour un onduleur d'une puissance nominale de 50 kW, sont les suivantes :

- Ls ~=300 microH,

- Cs ~= 6.8 nanoF,

- Cov ~= 1410 nanoF (formé par trois capacités de 470 nF),

- Vrec ~= 1.5 Vbus,

- Lrec = 56 microH,

- Créc = 20 nanoF,

- type de commutateur : IGBT.

*Tableau 1 - Exemple comparatif*

|  | Puissance fournie | Pertes totales | Pertes par dissipation dans le circuit ajouté | Pertes par commutation | Fréquence de commutation |
|---|---|---|---|---|---|
| Art antérieur Hard switching (Figure 1) | 50 kW | 2 kW | 0 kW | 2 kW | 20 khz |
| Art antérieur Soft switching (Figure 3) | 50 kW | 2 kW | 1 kW | 1 kW | 50 khz |
| Invention (Figure 5) | 50 kW | 1.15 kW | 0.15 kW | 1 kW | 50 khz |

On remarque que le système de conversion permet de réduire les pertes totales d'environ 42,5 % par rapport aux systèmes de conversion selon l'art antérieur. Cette réduction est due à une réduction des pertes par commutation liées à la commutation douce (réduction de 50 % des pertes par commutation par rapport à une commutation dure), et par une réduction des pertes par dissipation dans le circuit ajouté (réduction de 85 % des pertes par dissipation par rapport à une commutation douce).

**Revendications**

**1.** Module de puissance pour système de conversion d'une puissance électrique continue en puissance électrique triphasée, ledit module de puissance comportant une première et une deuxième entrées (E1, E2), différentes l'une de l'autre, aptes à être connectées directement aux entrées continues dudit système de conversion, deux commutateurs (1) placés en série entre lesdites entrées (E1, E2), et une première sortie (S) disposée entre lesdits deux commutateurs (1), ladite première sortie (S) étant apte à être connectée à une phase de sortie alternative dudit système de conversion, **caractérisé en ce que** ledit module de puissance comporte en outre deux diodes (D) et deux condensateurs (Cs, Cov), et **en ce que** lesdites deux diodes (D) sont montées directement en série, et sont connectées directement à la première entrée (E1) dudit module et directement à une deuxième sortie (Vrec) dudit module, différente de la première sortie (S) dudit module, ladite deuxième sortie (Vrec) étant apte à être connectée directement à un module récupérateur d'énergie dudit système de conversion.

2. Module selon la revendication 1, dans lequel un premier condensateur de modulation de tension (Cs) est connecté entre un point compris entre lesdites diodes (D) et ladite première sortie (S).

3. Module selon l'une des revendications précédentes, dans lequel un deuxième condensateur (Cov) est connecté entre ladite deuxième sortie (Vrec) dudit module et à une deuxième entrée (E2) dudit module.

4. Module selon l'une des revendications précédentes, dans lequel lesdits commutateurs (1) sont du type MOSFET ou IGBT.

5. Module selon l'une des revendications précédentes, dans lequel ledit condensateur de modulation de tension (Cs) a une capacité comprise entre 4 et 15 nF.

6. Module selon l'une des revendications précédentes, dans lequel ledit deuxième condensateur (Cov) a une capacité comprise entre 500 et 5000 nF.

7. Module selon l'une des revendications précédentes, dans lequel ledit module forme un bloc (7) apte à être monté sur une carte d'un système de conversion.

8. Module selon la revendication 7, dans lequel ledit bloc (7) comporte des moyens de fixation (10, 11, 12).

9. Module selon la revendication 8, dans lequel lesdits moyens de fixations comprennent au moins une encoche (10) pour le passage d'une vis.

10. Système de conversion d'une puissance électrique continue en puissance électrique triphasée comportant trois bras de commutation (A, B, C), **caractérisé en ce que** chaque bras de commutation (A, B, C) comporte un module de puissance selon l'une des revendications précédentes.

11. Système selon la revendication 10, dans lequel chaque bras de commutation (A, B, C) comprend deux ou trois modules de puissance selon l'une des revendications précédentes.

12. Système selon l'une des revendications 10 ou 11, dans lequel ledit système de conversion comporte un module récupérateur d'énergie et au moins une bobine de modulation de courant (Ls).

13. Système moteur comprenant au moins un moyen de stockage d'énergie électrique et une machine électrique triphasée (M), **caractérisé en ce que** le système moteur comporte un système de conversion selon l'une des revendications 10 à 12, pour convertir l'énergie électrique continue dudit moyen de stockage de l'énergie électrique en énergie électrique alternative triphasée pour ladite machine électrique.

**Patentansprüche**

1. Leistungsmodul für ein Umwandlungssystem von Gleichstrom in Dreiphasenstrom, das genannte Leistungsmodul enthält einen ersten und einen zweiten Eingang (E1, E2), die sich voneinander unterscheiden, die dazu dienen, direkt mit den Gleichstromeingängen des genannten Umwandlungssystems verbunden zu werden, zwei Schalter (1) sind seriengeschaltet zwischen den genannten Eingängen (E1, E2), und ein erster Ausgang (S) ist zwischen den genannten zwei Schaltern (1) angeordnet, der genannte erste Ausgang (S) dient dazu, mit einer Wechselstrom-Ausgangsphase des genannten Umwandlungssystems verbunden zu werden, das **dadurch gekennzeichnet ist, dass** das genannte Leistungsmodul außerdem zwei Dioden (D) und zwei Kondensatoren (Cs, Cov) enthält, und dadurch, dass die genannten zwei Dioden (D) direkt seriengeschaltet sind, und dass sie direkt mit dem ersten Eingang (E1) des genannten Moduls und direkt mit einem zweiten Ausgang (Vrec) des genannten Moduls verbunden sind, der sich vom ersten Ausgang (S) des genannten Moduls unterschiedet, der genannte zweite Ausgang (Vrec) dient dazu, direkt mit einem Energierückgewinnungsmodul des genannten Umwandlungssystems verbunden zu werden.

**2.** Modul gemäß Patentanspruch 1, in dem ein erster Kondensator der Spannungsmodulation (Cs) zwischen einem Punkt zwischen den genannten Dioden (D) und dem genannten ersten Ausgang (S) angeschlossen ist.

**3.** Modul gemäß einem der vorhergehenden Patentansprüche, in dem ein zweiter Kondensator (Cov) zwischen dem genannten Ausgang (Vrec) des genannten Moduls und einem zweiten Eingang (E2) des genannten Moduls angeschlossen ist.

**4.** Modul gemäß einem der vorhergehenden Patentansprüche, in dem die genannten Schalter (1) MOSFET- oder IGBT-Schalter sind.

**5.** Modul gemäß einem der vorhergehenden Patentansprüche, in dem der genannte Kondensator der Spannungsmodulation (Cs) eine Kapazität zwischen 4 und 15 nF hat.

**6.** Modul gemäß einem der vorhergehenden Patentansprüche, in dem der genannte zweite Kondensator (Cov) eine Kapazität zwischen 500 und 5000 nF hat.

**7.** Modul gemäß einem der vorhergehenden Patentansprüche, in dem das genannte Modul einen Block (7) bildet, der dazu dient, auf einer Leiterplatte eines Umwandlungssystems montiert zu werden.

**8.** Modul gemäß Patentanspruch 7, in dem der genannte Block (7) Befestigungsvorrichtungen (10, 11, 12) enthält.

**9.** Modul gemäß Patentanspruch 8, in dem die genannten Befestigungsvorrichtungen mindestens einen Hohlraum (10) für den Durchgang einer Schraube enthalten.

**10.** Umwandlungssystem von Gleichstrom in Dreiphasenstrom, das drei Schaltarme (A, B, C) enthält, das **dadurch gekennzeichnet ist, dass** jeder Schaltarm (A, B, C) ein Leistungsmodul gemäß einem der vorhergehenden Patentansprüche enthält.

**11.** System gemäß Patentanspruch 10, in dem jeder Schaltarm (A, B, C) zwei oder drei Leistungsmodule gemäß einem der vorhergehenden Patentansprüche enthält.

**12.** System gemäß einem der Patentansprüche 10 oder 11, in dem das genannte Umwandlungssystem ein Energierückgewinnungsmodul und mindestens eine Modulationsspule (Ls) für den Strom enthält.

**13.** Motorsystem, das mindestens eine Stromspeichervorrichtung und eine Dreiphasenstrommaschine (M) enthält, das **dadurch gekennzeichnet ist, dass** das Motorsystem ein Umwandlungssystem gemäß einem der Patentansprüche von 10 bis 12 enthält, um den Gleichstrom der genannten Stromspeichervorrichtungen in Dreiphasenwechselstrom für die genannte Strommaschine umzuwandeln.

**Claims**

**1.** Power module for a system for converting a direct electric power into a three-pase electric power, said power module comprising a first and a second input (E1, E2), different one from the other, adapted to be directly connected to the direct inputs of said converting system, two switches (1) arranged in series between said inputs (E1, E2), and a first output (S) arranged between said two switches (1), said first output (S) being adapted to be connected to an alternate output phase of said converting system, **characterized in that** said power module further comprises two diodes (D) and two capacitors (Cs, Cov), and **in that** said two diodes (D) are directly assembled in series, and are directly connected to the first input (E1) of said module and directly to a second output (Vrec) of said module, different from the first output (S) of said module, said second output (Vrec) being adapted to be directly connected to an energy recovering module of said converting system.

**2.** Module according to claim 1, wherein a first voltage modulating capacitor (Cs) is connected between a spot included between said diodes (D) and said first output (S).

**3.** Module according to any one of the previous claims, wherein a second capacitor (Cov) is connected between said second output (Vrec) of said module and a second input (E2) of said module.

4. Module according to any one of the previous claims, wherein said switches (1) are of the MOSFET or IGBT type.

5. Module according to any one of the previous claims, wherein said voltage modulating capacitor (Cs) has a capacity included between 4 and 15 nF.

6. Module according to any one of the previous claims, wherein said second capacitor (Cov) has a capacity between 500 and 5000 nF.

7. Module according to any one of the previous claims, wherein said module forms a block (7) adapted to be assembled on a board of a converting system.

8. Module according to claim 7, wherein said block (7) comprises fastening means (10, 11, 12).

9. Module according to claim 8, wherein said fastening means comprise at least one recess (10) for passing a screw.

10. System for converting a direct electric power into a three-phase electric power comprising three switching arms (A, B, C), **characterized in that** each switching arm (A, B, C) comprises a power module according to any one of the previous claims.

11. System according to claim 10, wherein each switching arm (A, B, C) comprises two or three power modules according to any one of the previous claims.

12. System according to any one of claims 10 or 11, wherein said converting system comprises an energy recovering module and at least one current modulating coil (Ls).

13. Motor system comprising at least one electric energy storing means and a three-phase electric machine (M), **characterized in that** the motor system comprises a converting system according to any one of claims 10 to 12, to covert direct electric energy of said electric energy storing means into alternate three-phase electric energy for said electric machine.

ART ANTERIEUR
Figure 1

Figure 2

**ART ANTERIEUR**
**Figure 3**

**Figure 4**

**Figure 5a**

**Figure 5b**

**Figure 6**

**Figure 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 11016854 A
- DE 10062075 A1, RUNGE w
- JP H03145756 A